# EUROPEAN PATENT APPLICATION

(11) **EP 1 172 201 A2**
(43) Date of publication of application: **16.01.2002**
(21) Application number: 01115022.4
(22) Date of filing: 20.06.2001
(51) Int. Cl.: B32B 25/08, C08L 21/00, C08L 67/00, C08J 3/12, B29B 9/04

(54) **Elastomer molded product**

(30) Priority: 20.06.2000 JP 2000184170
(71) Applicant: Sumitomo Chemical Company, Limited, Chuo-ku Osaka 541-8550 (JP)
(72) Inventor: Yamaguchi, Takanari, Tsukuba-shi, Ibaraki (JP); Hidaka, Yasuaki, Tsukuba-shi, Ibaraki (JP); Kumada, Hiroaki, Tsukuba-shi, Ibaraki (JP)
(74) Representative: VOSSIUS & PARTNER

(57) **Abstract**

Provided is elastomer molded products including a construction comprising a liquid crystal polymer layer and an elastomer layer or a construction wherein liquid crystal polymer flakes are dispersed in the elastomer. The elastomer molded products are excellent in gas barrier properties and can be made thin without sacrificing the flexibility as elastomer.

## Description

The present invention relates to an elastomer molded product that contains a liquid crystal polymer having improved gas barrier properties.

Elastomeric products have generally such properties as elasticity (recovery from deformation), elongation and flexibility and find wide applications. For example, sheets, tubes, balls, tires, balloons and others are required to have those properties such as elasticity, elongation and flexibility, and an elastomer is used as the material in many cases. Practically, materials used for these applications include conventional natural rubber and chemically crosslinked-type elastomers of synthetic rubber such as chloroprene and in recent years, a thermoplastic elastomer, which is readily molded, has begun to be used.

However, elastomers are often not high in gas barrier properties, and therefore a balloon and ball shrink and decrease in bounding property with lapse of time. The tires have to be replenished with air regularly. To improve the gas barrier properties, the elastomer has to be increased in thickness or cured by special techniques. But those techniques do not always produce satisfactory results in performance. Increase in thickness also increases the weight, and curing reduces flexibility.

Meanwhile, it has been predicted that a liquid crystal polymer is excellent in gas barrier properties. However, it is difficult to mold liquid crystal polymers into a film because of its unique viscosity behavior due to the self-orientation of liquid crystal polymer molecules in the molten state. For this reason, no attempts have been made at all to use films and/or flakes made of a liquid crystal polymer into an elastomer molded product.

The object of the present invention is to provide elastomer molded products that are excellent in gas barrier properties and can be made thin without sacrificing the flexibility as elastomer.

The object of the present invention could be solved by adopting a specific construction combining an elastomer with a liquid crystal polymer exhibiting optical anisotropy in molten state.

That is, the present invention relates to an elastomer molded product, including a construction where a layer containing a liquid crystal polymer and a layer made of an elastomer are laminated. The elastomer molded product may include a construction where a layer made of an elastomer a layer containing a liquid crystal polymer and a layer made of an elastomer are laminated in this order.

Furthermore, the present invention relates to an elastomer molded product, wherein liquid crystal polymer flakes are dispersed in the elastomer.

The layer containing a liquid crystal polymer described above can be a film made of a liquid crystal polymer. The layer can also be made by coating a solution containing liquid crystalline polymer flakes.

The film made of a liquid crystal polymer can be laminated on a surface of an elastomer by heat-pressing or through an adhesive. Moreover, the film can be placed between two elastomers, and the laminated product thereof can be obtained in the same manner as described above. The film can be preferably made by inflation molding.

The layer containing a liquid crystal polymer may be a layer made of liquid crystal polymer flakes. The layer can be made by dispersing liquid crystal polymer flakes in an adhesive or its solution, and coating it on an elastomer. The adhesive dispersion of the liquid crystal polymer flakes can be used for a layer placed between two elastomers as well.

Another suitable embodiment of the present invention is an elastomer molded product, wherein liquid crystal polymer flakes are dispersed in the elastomer. In the elastomer molded product, the amount of the flakes is 5 to 100 parts by weight, preferably 10 to 80 parts by weight, based on 100 parts by weight of the elastomer.

The elastomer molded product may have a form of sheet, tubular, hollow-spherical, doughnut-shaped or balloon-shaped.

The liquid crystal polymer used in the present invention is a liquid crystal polymer exhibiting optical anisotropy in the molten state. Examples of the liquid crystal polymer include wholly aromatic or semi-aromatic type polyester, polyester amide and polyester imide and resin compositions containing thereof.

In view of the molding capability and performances of the resulting film, it is desirable in the present invention to use a liquid crystal polymer resin composition comprising (A) a liquid crystal polyester as a continuous phase and (B) a copolymer having a functional group reactive with the liquid crystal polyester as a dispersion phase.

The liquid crystal polyester used in the present invention is a polyester called "thermotropic liquid crystal polymer". More specifically, examples thereof include:
(1) those obtainable by the reaction of an aromatic dicarboxylic acid, an aromatic diol, and an aromatic hydroxycarboxyic acid;
(2) those obtainable by the reaction of a combination of different kinds of aromatic hydroxycarboxylic acids;
(3) those obtainable by the reaction of an aromatic dicarboxylic acid with a nuclear-substituted diol; and
(4) those obtainable by the reaction of a polyester such as polyethylene terephthalate with an aromatic hydroxycarboxylic acid; and preferably forms an anisotropic molten product at a temperature of 400°C or lower. Further, in place of the aromatic dicarboxylic acid, the aromatic diol, or the aromatic hydroxycarboxylic acid, ester derivatives thereof can be used.

Examples of repeating units of the liquid crystal polyester include the following (1) repeating unit derived from aromatic dicarboxylic acid, and (2) repeating unit derived from aromatic diol, without being limited thereto.

### (1) Repeating unit derived from aromatic dicarboxylic acid :

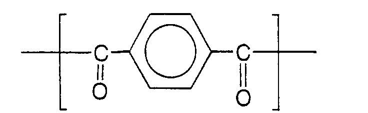

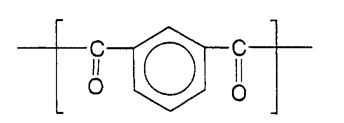

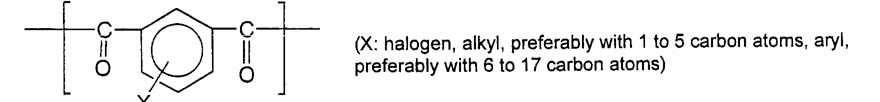

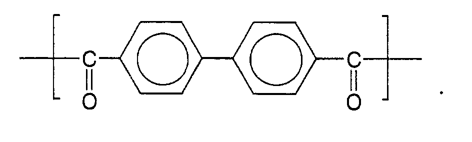

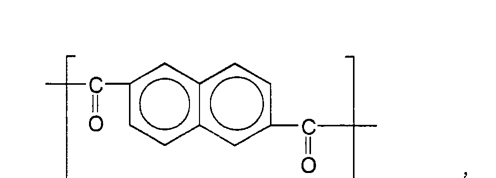

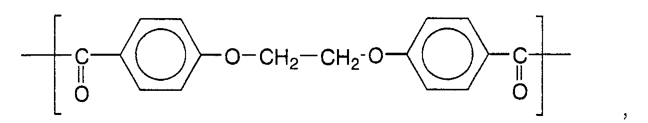

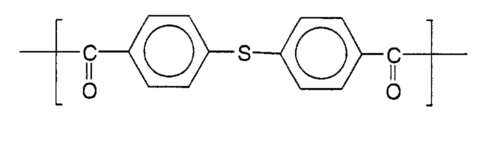

### Repeating unit derived from an aromatic diol:

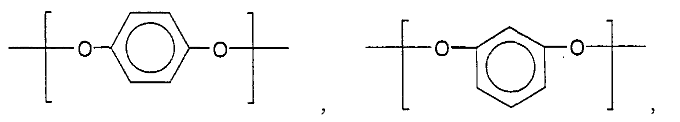

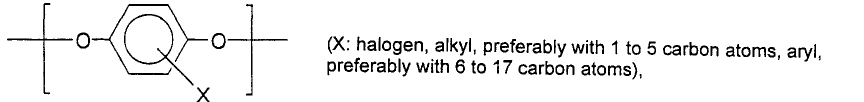

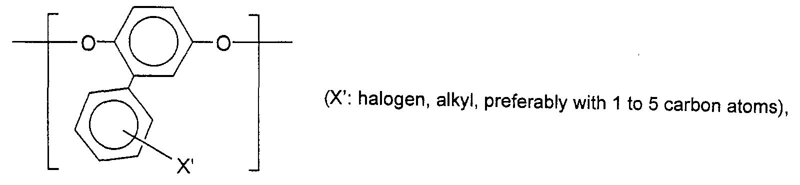

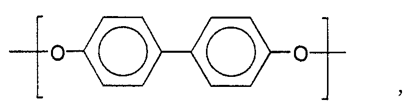

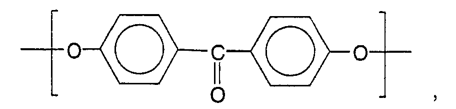

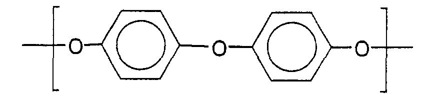

### Repeating unit derived from an aromatic hydroxycarboxylic acid:

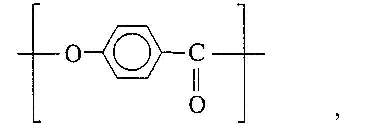

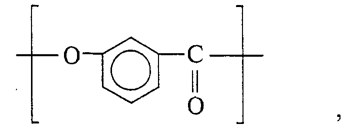

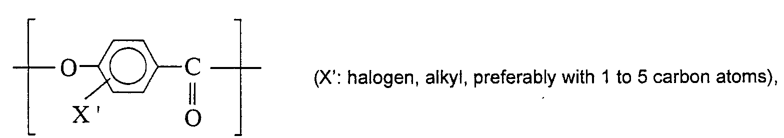

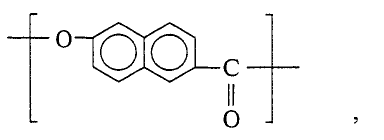

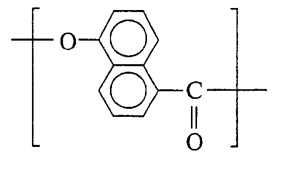

Liquid crystal polyesters including a repeating unit 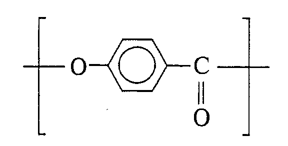 are particularly preferable in heat resistance, mechanical properties, and processability, and those including at least 30 mole % of the repeating unit are further preferable. Specifically, combinations of the repeating units shown as the following (I) - (VI) are suitable. Moreover, the wholly aromatic polyesters other than (IV) is still suitable in view of moisture proof property.

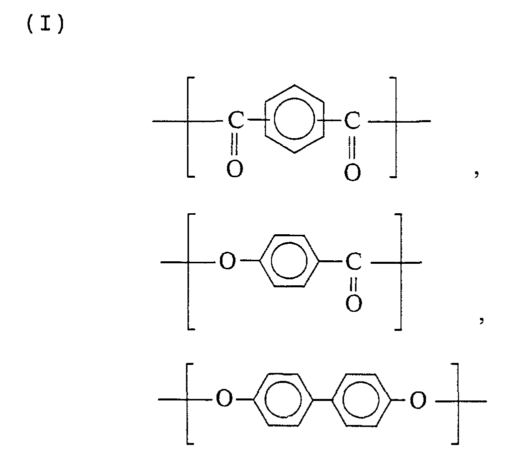

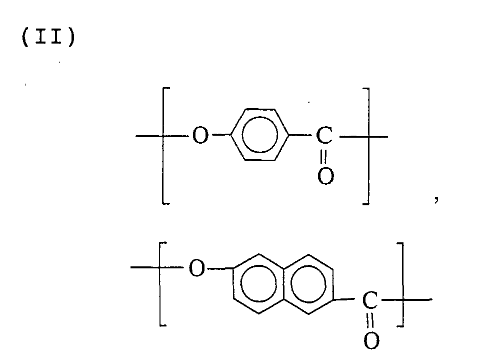

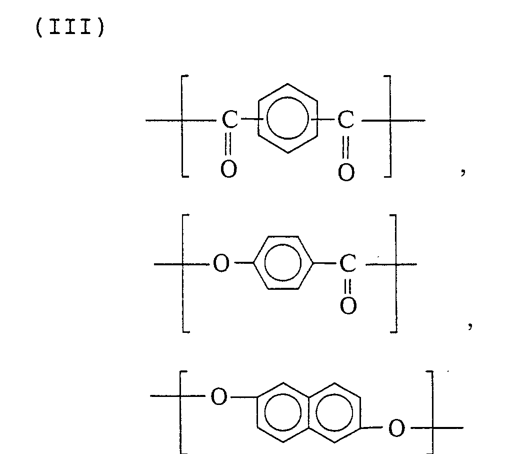

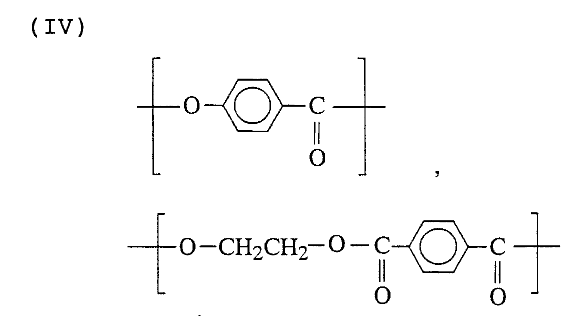

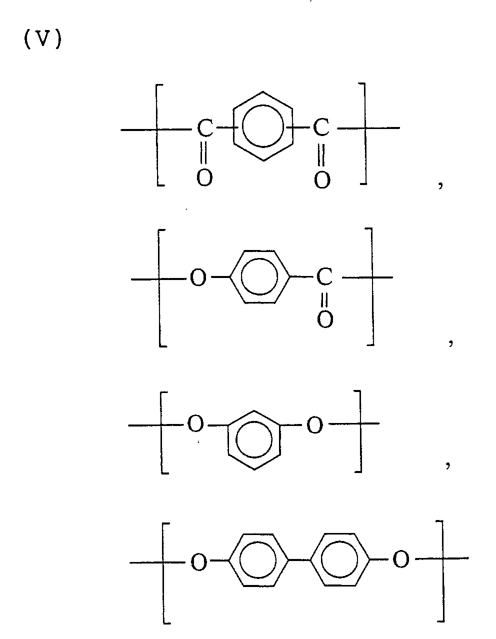

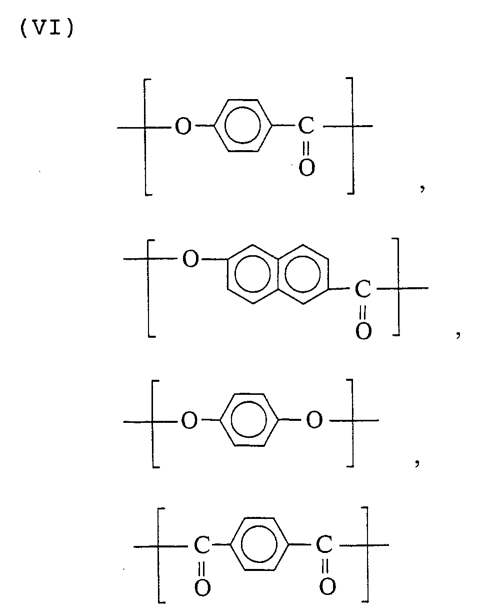

Production method of the above liquid crystal polyesters (I) to (VI) are disclosed in JP-B- 47-47870, JP-B- 63-3888, JP-B-63-3891,JP-B-56-18016,and JP-A-2-51523. Among these, combinations represented by (I), (II), and (IV) are preferable, and the combinations (I) and (II) are more preferable.

In the present invention, a liquid crystal polyester comprising: 30-80 % by mole of repeating unit (a'); 0-10 % by mole of repeating unit (b'); 10-25 % by mole of repeating unit (c'); and 10-35 % by mole of repeating unit (d'); is preferably used for the field where high heat resistance is required. 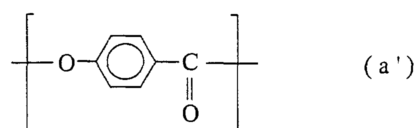 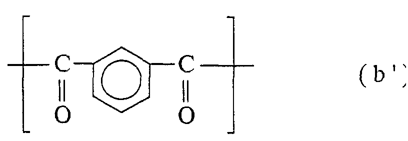 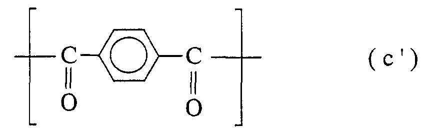 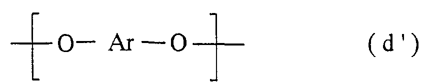 (In the formula, Ar is a divalent aromatic group, preferably a phenylene, naphthylene or anthrylene group.)

In the elastomer molded product of the present invention, from standpoints such as an environmental problem, in the field required for easy abandonment, such as incineration after use, a liquid crystal polyester constituted with the combination of elements of only carbon, hydrogen and oxygen is used especially preferably, among the suitable combinations required for each fields exemplified so far.

The component (B) used for the above liquid crystal polyester resin composition is preferably a copolymer having a functional group reactive with the liquid crystal polyester. As such a functional group reactive with the liquid crystal polyester, any functional groups can be used as long as it has reactivity the liquid crystal polyester. Concretely, exemplified are an oxazolyl group, an epoxy group, an amino group, etc., and preferably an epoxy group. The epoxy group etc. may exist as a part of other functional groups, and as such an example, a glycidyl group is exemplified.

In the copolymer (B), the method of introducing such a functional group into a copolymer, it is not limited especially and can be carry out by the well-known methods. For example, it is possible to introduce a monomer having this functional group by copolymerization in a preparation stage of the copolymer. It is also possible to conduct a graft copolymerization of a monomer having this functional group to a copolymer.

As the monomer having a functional group reactive with the liquid crystal polyester, among them, as the monomer containing a glycidyl group, unsaturated glycidyl carboxylates and/or unsaturated glycidyl ethers are used preferably.

Specifically, as unsaturated glycidyl carboxylate, exemplified are, for example: glycidyl acrylate, glycidyl methacrylate, itaconic acid diglycidyl ester, butene tricarboxylic acid triglycidyl ester, p-styrene glycidyl carboxylate, etc. As unsaturated glycidyl ether, exemplified are, for example: vinyl glycidyl ether, allyl glycidyl ether, 2-methyl allyl glycidyl ether, methacryl glycidyl ether, styrene-p-glycidyl ether, etc.

Unsaturated glycidyl carboxylate is a compound suitably represented by the general formula 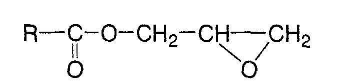 (R is a hydrocarbon group of 2-13 carbons having an ethylenically unsaturated bond) and unsaturated glycidyl ether is a compound suitably represented by the general formula 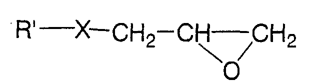 (R' is a hydrocarbon group of 2-18 carbons having an ethylenically unsaturated bond, and X is -CH2-O- or

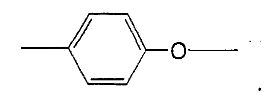

The above copolymer (B) having a functional group reactive with a liquid crystal polyester, is suitably a copolymer having 0.1 to 30% by weight of a unsaturated glycidyl carboxylate unit and/or a unsaturated glycidyl ether unit.

Moreover, the above copolymer (B) having a functional group reactive with liquid crystal polyester may be a thermoplastic resin as well as a rubber, and it may be the mixture of a thermoplastic resin and a rubber. Preferable it is a rubber which can afford excellent heat stability and flexibility to a molded article, such as a film or a sheet obtained using the liquid crystal polyester resin composition.

Suitably, the above copolymer (B) having a functional group reactive with the liquid crystal polyester is a copolymer having a heat of fusion of crystal of less than 3J/g. Moreover, the Mooney viscosity of the copolymer (B) is suitably 3-10, more suitably 3-30, and especially suitably 4-25.

Here, Mooney viscosity means the value measured at 100°C with a large rotor according to JIS K6300.

When it is outside the above ranges, heat stability or flexibility of the composition may deteriorate and it is not preferable.

The method of introducing such a functional group reactive with a liquid crystal polyester into a rubber, is not limited especially and can be carry out by the well-known methods. For example, it is possible to introduce a monomer having the functional group by copolymerization in a preparation stage of the rubber. It is also possible to conduct a graft copolymerization of a monomer having the functional group to a rubber.

Concrete examples of the copolymer (B) having a functional group reactive with the liquid crystal polyester, as a rubber having epoxy group, include a copolymer rubber of (meth)acrylate-ethylene-(unsaturated glycidyl carboxylate and/or unsaturated glycidyl ether).

Here, the (meth)acrylate is an ester obtained from an acrylic acid or methacrylic acid and an alcohol. As the alcohol, an alcohol having 1-8 carbons is preferable. Concrete examples of the (meth)acrylates include methyl acrylate, methyl methacrylate,n-butyl acrylaje, n-butylmethacrylate, tert-butyl acrylate, tert-butyl methacrylate, 2-ethylhexyl acrylate, 2-ethylhexyl methacrylate, etc. The (meth)acrylates can be used alone or as a mixture of two or more therof.

In the copolymer rubber of the present invention, the (meth)acrylate unit is suitably 40 - 96 . 9% by weight, more suitably 45 - 70 % by weight, the ethylene unit is suitably 3 -50% by weight, more suitably 10 - 49 % by weight, and the unsaturated glycidyl ether unit and/or unsaturated glycidyl ether unit is suitably 0.1 - 30 % by weight, more suitably 0.5 - 20 % by weight.

In case the copolymer rubber of the present invention is outside the above range, heat stability and mechanical properties of the obtained molded product, such as film or sheet may become insufficient, and it is not preferable.

The copolymer rubber can be prepared by usual methods, for example, bulk polymerization, emulsion polymerization, solution polymerization, etc. using a free radical initiator. Typical polymerization methods are those described in JP-A-48-11388, JP-A-61-127709, etc., and it can be prepared under the existence of a polymerization initiator which generates a free radical, at the pressure of more than 500 kg/cm², and the temperature of 40-300 °C.

Examples of other rubbers which can be used as copolymer (B) include, an acryl rubber having a functional group reactive with the liquid crystal polyester, and a block copolymer rubber of vinyl aromatic hydrocarbon compound-conjugated diene compound having a functional group reactive with the liquid crystal polyester.

The acryl rubber here is suitably one having at least one monomer as a main component selected from the compound represented by the general formula (1) 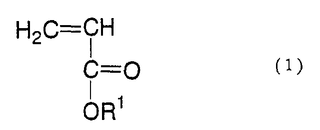 (in the formula, R¹ is an alkyl group, preferably with 1 to 18 carbon atoms, or a cyano alkyl group having 1-18 carbon atoms), the general formula (2) 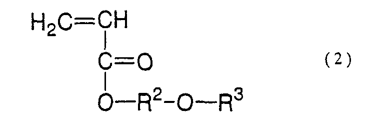 (in the formula, R² is an alkylene group having 1-12 carbon atoms, R³ is an alkyl group having 1-12 carbon atoms.), and the general formula (3) 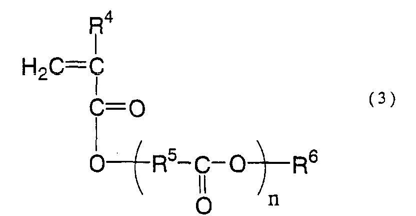 (in the formula, R⁴ is a hydrogen atom or methyl group, R⁵ is an alkylene group having 3-30 carbon atoms, R⁶ is an alkyl group or derivative thereof having 1-20 carbon atoms, and n is an integer of 1-20. )

Concrete examples of the alkyl acrylate represented by the above general formula (1) include, for example, methyl acrylate, ethyl acrylate, propyl acrylate, butyl acrylate, pentyl acrylate, hexyl acrylate, octyl acrylate, 2-ethylhexyl acrylate, nonyl acrylate, decyl acrylate, dodecyl acrylate, cyanoethyl acrylate, etc.

Moreover, examples of the alkoxyalkyl acrylate represented by the above general formula (2) include, for example, methoxy ethyl acrylate, ethoxy ethyl acrylate, butoxy ethyl acrylate, ethoxy propyl acrylate, etc. These can be used alone or in combination of two or more, as a main component of the acryl rubber.

As a composition component of the acryl rubber, an unsaturated monomer which can be copolymerized with at least one monomer selected from the compounds represented by the above general formulas (1) - (3) can be used, according to requirements.

Examples of such unsaturated monomers include styrene, α -methyl styrene, acrylonitrile, halogenated styrene, methacrylonitrile, acryl amide, methacryl amide, vinyl naphthalene, N-methylol acrylamide, vinyl acetate, vinyl chloride, vinylidene chloride, benzyl acrylate, methacrylic acid, itaconic acid, fumaric acid, maleic acid, etc.

The suitable component ratio of the acryl rubber having a functional group reactive with the liquid crystal polyester is: 40.0 - 99.9 % by weight of one monomer selected at least from compounds represented by the above general formulas (1) - (3); 0.1 - 30.0 % by weight of unsaturated glycidyl carboxylate and/or unsaturated glycidyl ether; 0.0 - 30.0 % by weight of another monomer which can be copolymerized with the above monomer selected at least from compounds represented by the above general formula (1) - (3).

If the component ratio of the acryl rubber is within the above range, heat resistance, impact resistance, and mold processing property of the composition are good, and it is preferable.

The preparation process of the acryl rubber is not especially limited, and well known polymerization method described, for example, in JP-A-59-113010, JP-A-62-64809, JP-A-3-160008, or WO 95/04764 can be used. It can be prepared under the existence of a radical initiator, by emulsion polymerization, suspension polymerization, solution polymerization, or the bulk polymerization.

Suitable examples the block copolymer rubber of vinyl aromatic hydrocarbon compound-conjugated diene compound having the above functional group reactive with the liquid crystal polyester include: a rubber which is obtained by epoxidization of a block copolymer comprising (a) a sequence mainly consisting of vinyl aromatic hydrocarbon compound, and (b) a sequence mainly consisting of a conjugated diene compound; or a rubber which is obtained by epoxidization of a hydrogenated product of said block copolymer.

The block copolymer rubber of the vinyl aromatic hydrocarbon compound-conjugated diene compound or the hydrogenated product thereof can be prepared by the well-known methods, for example, as described in JP-B-40-23798, JP-A-59-133203, etc.

Examples of the aromatic hydrocarbon compound include, for example, styrene, vinyltoluene, divinylbenzene, α-methyl styrene, p-methyl styrene, vinyl naphthalene, etc. Among them, styrene is suitable. Examples of the conjugated diene compound include, for example, butadiene, isoprene, 1,3-pentadiene, 3-butyl-1,3-octadiene, etc. Butadiene and isoprene are suitable.

As a rubber used as copolymer (B), a copolymer rubber of (meth)acrylate-ethylene-(unsaturated glycidylcarboxylate and/or unsaturated glycidylether) is suitably used.

A rubber used as copolymer (B) is vulcanized according to requirements, and it can be used as a vulcanized rubber. Vulcanization of the above copolymer rubber of (meth)acrylate-ethylene-(unsaturated glycidylcarboxylate and/or unsaturated glycidylether) is attained by using a polyfunctional organic carboxylic acid, a polyfunctional amine compound, an imidazole compound, etc., without being limited thereto.

As a concrete example of a copolymer having a functional group reactive with the liquid crystal polyester (B), examples of a thermoplastic resin having an epoxy group include an epoxy group containing ethylene copolymer comprising: (a) 50 - 99 % by weight of an ethylene unit, (b) 0.1 - 30 % by weight of an unsaturated glycidylcarboxylate unit and/or unsaturated glycidylether unit, preferably 0.5 - 20 % by weight, and (c) 0-50% by weight of an ethylenically unsaturated ester compound unit,

Examples of the ethylenically unsaturated ester compound (c) include a vinyl ester of a carboxylic acid and an alkyl ester of an α,β - unsaturated carboxylic acid, etc. such as: vinyl acetate, vinyl propionate, methyl acrylate, ethyl acrylate, butyl acrylate, methyl methacrylate, ethyl methacrylate, and butyl methacrylate. Vinyl acetate, methyl acrylate and ethyl acrylate are especially preferable.

Concrete examples of the epoxy group containing ethylene copolymer include, for example, a copolymer comprising an ethylene unit and a glycidyl methacrylate unit, a copolymer comprising an ethylene unit, a glycidyl methacrylate unit and a methyl acrylate unit, a copolymer comprising an ethylene unit, a glycidyl methacrylate unit and an ethyl acrylate unit, and a copolymer comprising an ethylene unit, a glycidyl methacrylate unit and a vinyl acetate unit etc.

Melt index (hereinafter referred to as MFR. JIS K6760, at 190 °C, 2.16kg load) of the epoxy group containing ethylene copolymer is suitably 0.5-100g/10 minutes, more preferably 2-50g/10 minutes.

When the melt index is more than 100g/10 minutes, it is not preferable in respect to mechanical physical properties of the composition. When the melt index is less than 0.5 g / 10 minutes, the compatibility of component (A) with a liquid crystal polyester is inferior and it is not preferable.

The epoxy group containing ethylene copolymer has suitably a bending shear modulus of 10 - 1300 kg/cm2, more suitably 20-1100kg/cm2. When the bending shear modulus is outside the range, mold processing property and mechanical properties of the composition may become inadequate.

The epoxy group containing ethylene copolymer is manufactured by a high pressure radical polymerization method of copolymerizing usually an unsaturated epoxy compound and ethylene, under existence of a radical generating agent, at a pressure of 500 to 4000 atm and at 100-300 °C, under existence or non-existence of a suitable solvent and a chain transfer agent. It is manufactured also by a method of conducting molten graft copolymerization in an extruder, mixing an unsaturated epoxy compound and a radical generating agent with polyethylene.

The above liquid crystal polyester resin composition is suitably a resin composition comprising (A) a liquid crystal polyester as continuous phase, and (B) a copolymer having a functional group reactive with the liquid crystal polyester as dispersed phase. When the liquid crystal polyester is not a continuous phase, the gas barrier property, heat resistance , etc. of a film comprising the liquid crystal polyester resin composition may decrease remarkably.

In the resin composition of the copolymer and the liquid crystal polyester having such a functional group, although details of the mechanism are unknown it is thought that a reaction occurs between component (A) and component (B) in the composition, while component (A) forms a continuous phase, component (B) disperses minutely, thus the moldability of the composition is improved.

One embodiment of the above liquid crystal polyester resin composition is a resin composition comprising (A) 56.0 - 99.9 % by weight of a liquid crystal polyester, suitably 65.0 - 99.9 % by weight, further suitably 70 - 98 % by weight, (B) 44.0 - 0.1 % by weight of a copolymer having a functional group reactive with the liquid crystal polyester, suitably 35.0 - 0.1 % by weight, further suitably 30 - 2 % by weight.

When component (A) is less than 56.0 % by weight, the water vapor barrier property and heat resistance of the film obtained from the composition decrease. Moreover, when component (A) is more than 99.9% by weight, the mold processing property of the composition may decrease, and the price will become expensive as well.

Well-known can be used as the method of manufacturing such a liquid crystal polyester resin composition. For example, each component is mixed in a solution state, and then evaporating the solvent, or precipitating it in the solvent. From a industrial standpoint, a method of melt-kneading each component of the above composition in the molten state is suitable. For melt-kneading, currently generally used kneading machines such as an extruder having single or twin screws and various kinds of kneaders, can be used. High kneading machine having twin-screw is especially preferable.

In melt-kneading, the setting temperature of the cylinder of kneading machine is suitably in the range of 200-360 °C, more suitably 230-350 °C.

In kneading, each component may be mixed uniformly by a machine such as a tumbling mixer or a Henschel mixer beforehand. A method can be used as well, where each component may be quantitatively supplied separately into a kneading machine, with omitting the previous mixing, if necessary.

To the liquid crystal polymer used for the present invention, various kinds of additives such as organic filler, antioxidant, heat stabilizer, light stabilizer, flame retardant, lubricant, antistatic agent, inorganic or organic colorant, rust preventives, crosslinking agent, foaming agent, fluorescent agent, surface smoothing agent, surface gloss improver, release modifiers such as fluoropolymer, etc. , can be further added in the manufacturing process, or the subsequent process according to requirements.

It is desirable that the film made of the liquid crystal polymer according to the present invention is made by the inflation film molding method which permits biaxial orientation at the same time. That is, the liquid crystal polyester resin composition obtained by that method is fed into a melt kneading extrusion machine equipped with a ring slit, and then melt and kneaded with the temperature of the cylinder set preferably at 200 to 360°C, more preferably 230 to 350°C. Then, the molten resin is extruded from the ring-shaped slit either upward or downward into a cylinder-shaped film (this direction is the MD direction). The ring-shaped slit space is generally 0.1 to 5 mm, preferably 0.5 to 2 mm. The ring-shaped space diameter is generally 20 to 1,000 mm, preferably 50 to 300 mm.

For inflation molding (film making), the preferred blow up ratio is 1.5 to 10, and the preferred rate of elongation into machine direction (MD) is 1.5 to 40.

If the conditions set for inflation molding are out of the above range, it may be difficult to obtain a film with uniform thickness, and is free from creases and with high tensile strength.

The circumference of the blown film is cooled in air or water and passed through the nip roll before being taken up.

Formaking an inflation film, conditions can be selected depending on the properties of the composition so that a cylindrical melt film will be inflated with a uniform thickness and a smooth surface.

In the methods other than inflation, it may happen that the film is not biaxially oriented and the minimum strength is not obtained. If the film is biaxially oriented subsequently in another way, the production cost may be raised extraordinarily.

It is desirable that the surface free energy of the film made of the liquid crystal polymer is not lower than 35 dyne/cm. If the energy is less than that, it may happen that the adhesion between the elastomer and the liquid crystal polymer is insufficient. In case the surface free energy of the liquid crystal polymer film obtained is less than 35 dyne/cm, the film may be subjected to a surface treatment such as corona discharge.

The thickness of the film made of the liquid crystal polymer is preferably 0.5 *µ*m to 500 *µ*m. When the thickness is less than 0.5 *µ*m, handling property of the film may be deteriorated remarkably, and when more than 500 *µ*m, elasticity may be lost.

While the method of making flakes made of liquid crystal polymer is not restrictive in particular, the flakes may be obtained utilizing a thermal molding method of a liquid crystal polymer into a film and crushing the film by beating. It is more preferable that flakes are produced by crushing, that is, by cutting or beating the biaxially oriented film which have been prepared by inflation molding.

The liquid crystal polymer preferably used for the flakes is a composition comprising (A) 70.0 - 95.0% by weight of a liquid crystal polyester and (B) 30.0 to 5.0% by weight of a copolymer having a functional group reactive with the liquid crystal polyester. If the component (A) is less than 70.0% by weight, it is sometimes difficult to prepare flakes in tabular-form by crushing the obtained film, and further, modulus of elasticity is lowered to make difficult to keep the tabular-form during compounding with an elastomer. If the component (A) is more than 95.0% by weight, the flakes obtained by crushing the film have sometimes too much fibril-or pulp-like structure, and it is not preferable.

For preparing the flakes by crushing an inflation film, preferably usable are those molded at a blow ratio of 2.0 to 10. If the blow ratio is lower than 2.0, the obtained flakes may have too much fibril- or pulp-like structure sometimes, and it is not preferable.

The liquid crystal polymer flake of the present invention have substantially no fibril- or pulp-structure. The length and the width are larger than the thickness, preferably not less than fivefold, and more preferably not less than tenfold. Furthermore, the length is suitably larger than the width, preferably not less than twice, and more preferably not less than fourfold. The flakes have substantially tabular form, thus when they are compounded and dispersed in an elatomer, the faces of the flakes are arranged in parallel in the obtained elastomer molded product. Thus the effect of improvement of gas-barrier property and stiffness become easy to be obtained. When the flakes are dispersed in an adhesive and/or a paint, the faces of the flakes are disposed in parallel to the coating surface, and the gas-barrier property of the coated elastomer can be easily improved.

The liquid crystal polymer flakes having substantially no fibril or pulp structure have an average thickness of not less than 0.5 *µ*m and not more than 500 *µ*m, preferably not less than 3 *µ* m and not more than 200 *µ* m, and more preferably not less than 5 *µ*m and not more than 100 *µ*m. If the thickness is less than 0.5 *µ*m, the characteristics of the liquid crystal polymer may be hardly realized, and if it is more than 500 µm, the dispersing property of the flakes in the other polymer may be deteriorated.

The method for producing the liquid crystal polymer flakes is not especially limited, it is suitable to use a liquid crystal polymer film as a raw material, and produced by cutting and crushing. Thus, tabular form flakes having relatively even-size can be obtained easily, and flakes having uniform thickness in average can be obtained.

In the process of producing the polymer flakes, cutting methods such as by two blades or by a fixed blade and a rotating blade, which is generally used for cutting paper or film, can be adopted as "cutting" means.

Examples of a processing method for making a film into polymer flakes , include mechanical processing of crushing into flakes using a grinder, a mill, a beater, a Jordan engine, a refiner, etc. When the crushing process is conducted in wetting state, water, oil, surface active agent can be used in order to prevent fusing of the raw material resin. Moreover, the crushing can be facilitated by adding an alcohol such as isopropanol, ethanol, ethyleneglycol, to make the wettability of the polymer surface higher. Suitably, biaxially oriented inflation film of a liquid crystal polymer is crushed by a refiner in a wetting state.

As the film for obtaining a liquid crystal polymer flakes , for example, films or sheets of the above mentioned liquid crystal polymer can be adopted.

Examples thereof include films or sheets obtained by: extruding a molten resin from a T-die and winding (T-die method); extruding a molten resin from a circular die in circular form and cooling (inflation film forming method); heat-pressing method or solvent-casting method; and mono- or bi-axially stretching further films or sheets obtained by an injection or extrusion molding method. In order to obtain flakes having substantially no fibril or pulp like structure, a biaxially oriented film is preferable, and a film having the stretching ratio in TD direction of 2. If the stretching ratio is less than 2, then fibril- or pulp-like structure may be produced easily. In order to facilitate crushing the films, it is suitable to cut the films beforehand in either of the length or width to 0.5mm to 50mm, preferably 0.1mm to 20mm.

Here, the elastomer corresponds to those containing the rubber as before mentioned, that is, a polymeric substance having rubber elasticity at room temperature according to New Edition Polymer Dictionary (edited by Society of Polymer Science, Japan, 1988, Asakura Shoten). Concrete examples include, natural rubber, butadiene polymer, butadiene-styrene copolymer (random copolymer, block copolymer (including SEBS rubber, SBS rubber, etc.), graft copolymer,etc.),or hydrogenated products thereof, isoprene polymer, chloro butadiene polymer, butadiene-acrylonitrile copolymer, isobutylene polymer, isobutylene-butadiene copolymer rubber, isobutylene-isoprene copolymer, acrylate-ethylene copolymer rubber, ethylene-propylene copolymer rubber, ethylene-butene copolymer rubber, ethylene-propylene-styrene copolymer rubber, styrene-isoprene copolymer rubber, styrene-butylene copolymer, styrene-ethylene-propylene copolymer rubber, perfluoro rubber, fluororubber, chloroprene rubber, butyl rubber, silicone rubber, ethylene-propylene-non-conjugated diene copolymer rubber, thiol rubber, polyvulcanized rubber, polyurethane rubber, polyether rubber (e.g., polypropylene oxide etc.), epichlorohydrin rubber, polyester elastomer, polyamide elastomer, etc. Among them, acrylate-ethylene copolymer is used suitably and (meth)acrylate-ethylene copolymer rubber is still suitable.

These rubber-like substances can be prepared by any methods (for example, emulsion polymerization method, solution polymerization method, etc.) and any catalyst (for example, peroxide, trialkyl aluminium, lithium halide, nickel type catalyst, etc.).

An elastomer molded product according to the present invention may be obtained by laminating and/or bonding a layer made of elastomer with a layer containing a liquid crystal polymer, for example. It is desirable that the two layers are laminated and bonded through an adhesive layer. Concretely, a liquid crystal polymer film is laminated and bonded on a elastomer sheet through an adhesive layer

Another elastomer molded product according to the present invention that will be cited is one in which a layer containing liquid crystal polymer flakes is disposed on the surface of an elastomer molded product.

The following method of forming a layer containing liquid crystal polymer flakes may be cited. That is , the flakes made of liquid crystal polymer are dispersed in an adhesive. The adhesive composition thus obtained is applied on the surface of the layer made of elastomer.

As the adhesives used for the adhesive layer or used for coating application, preferable are urethane type adhesives, epoxy type adhesives, and thermoplastic elastomer type adhesives, and especially preferable are thermoplastic elastomer type adhesives and aqueous emulsion type adhesives of epoxy group-containing ethylene copolymer.

Examples of the thermoplastic elastomer type adhesives include epoxy-group containing copolymer, such as a copolymer of (meth)acrylate-ethylene-(unsaturated glycidyl carboxylate and/or unsatulated glycidyl ether), and a copolymer of vinylalcohol-ethylene-(unsaturated glycidyl carboxylate and/or unsatulated glycidyl ether).

Further, examples of epoxy-group containing ethylenic copolymer include a copolymer of ethylene-(unsaturated glycidyl carboxylate and/or unsatulated glycidyl ether).

While the methods of making the elastomer molded products are not restrictive in particular, it is possible to obtain a sheet-form elastomer molded product by applying the above-mentioned adhesive to the film of the liquid crystal polymer and pasting it to an elastomer sheet. Furthermore, this sheet can be processed into a balloon-shaped, hollow spherical molded product.

In another method preferably used, the film of the liquid crystal polymer is wound in the longitudinal direction along the circumference of a cylindrically molded elastomer and given a treatment to fully achieve the performance of the bonding agent, thus a tubular molded product is obtained. Further, the tubular molded product can be processed this way: a liquid crystal polymer with an adhesive applied over the outer surface is wound around a cylindrical core, and another elastomer layer is furthermore provided around the outer surface, and then the core can be withdrawn.

Also, an elastomer molded product according to the present invention can be obtained by dispersing flakes made of a liquid crystal polymer in an elastomer. Practically, the elastomer before crosslinking is mixed with the flakes made of liquid crystal polymer and kneaded by a Banbury mixer resulting an elastomer composition, which is then molded into a specific form, such as sheet, hollow molded product, tire, balloon, tube, and subjected to curing.

Furthermore, an elastomer molded product according to the present invention can be obtained by applying flakes made of liquid crystal polymer on the surface of an elastomer. Practically, flakes are dispersed in a dilute solution of an adhesive and the dispersion is applied to elastomer molded products in such shapes as sheet, balloon, tube and doughnut, and the solvent is evaporated, and thus an elastomer molded product is obtained. The preferred adhesives used include silicone-type, acryl-type and rubber-type adhesives.

### EXAMPLES

The following Examples further illustrate the present invention in detail but are not to be construed to limit the scope thereof.

### (1) Liquid crystal polyester as component (A)

(i) 8.3 kg (60 mol) of p-acetoxybenzoic acid, 2.49 kg (15 mol) of terephthalic acid, 0.83 kg (5 mol) of isophthalic acid and 5.45 kg (20.2 mol) of 4,4'-diacetoxydiphenyl were charged into a polymerization vessel equipped with a comb like stirring blade, the mixture was heated under nitrogen gas atmosphere with stirring and allowed to polymerize at 330°C for 1 hour. Acetic acid gas by-produced during this procedure was liquefied in a cooling tube, recovered and removed, while the mixture was polymerized under vigorous stirring. Then, the system was cooled gradually, a polymer obtained at 200°C was discharged from the system. The resulted polymer was ground with a hammer mill manufactured by Hosokawa Micron Corp. to obtain particles having a particle size of 2.5 mm or less. The particles were further treated at 280°C for 3 hours under nitrogen atmosphere in a rotary kiln to obtain a wholly aromatic polyester in the form of particles composed of repeating structural units as described below having a flow initiation temperature of 324°C.
   The flow initiation temperature means a temperature (°C) at which the melt viscosity measured by a CFT-500 type flow tester (manufactured by Shimadzu Corp.) is 48,000 poise when a resin which has been melted by heating at a temperature raising rate of 4°C/min is extruded through a nozzle having an internal diameter of 1 mm and a length of 10 mm under a load of 100 kgf/cm².
   Hereafter, this liquid crystal polyester is abbreviated as A-1. This polymer showed optical anisotropy at a temperature of 340°C or more under pressure. The repeating units of the liquid crystal polyester A-1 is as follows. 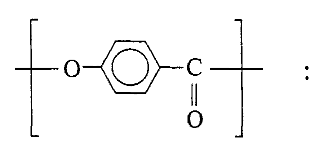 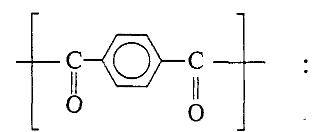 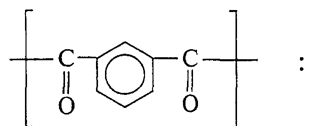 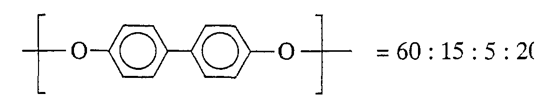
(ii) 16.6 kg (12.1 mole) of p-hydroxybenzoic acid, 8.4 kg (4.5 mole) of 6-hydroxy-2-naphthoic acid and 18.6 kg (18.2 mole) of acetic anhydride were charged into a polymerization vessel equipped with a comb like stirring blade, the mixture was heated under nitrogen gas atmosphere with stirring and allowed to polymerize at 320°C for 1 hour, further at 320°C for one hour under a reduced pressure of 2.0 torr. Acetic acid gas by-produced during this procedure was removed out of the system. Then, the system was cooled gradually, a polymer obtained at 180°C was discharged from the system.
   The resulted polymer was ground as the same manner with the above (A-1), then treated at 240°C for 5 hours under nitrogen atmosphere in a rotary kiln to obtain a wholly aromatic polyester in the form of particles composed of repeating structural units as described below having a flow initiation temperature of 270°C.
   Hereafter, this liquid crystal polyester is abbreviated as A-2. This polymer showed optical anisotropy at a temperature of 280°C or more under pressure.
   The repeating units of the liquid crystal polyester A-2 is as follows.

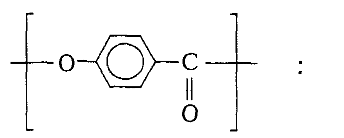

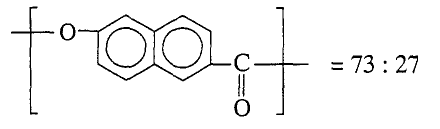

### (2) Rubber as component (B)

(i) According to the method described in Example 5 of JP-A-61-127709, a rubber having methyl acrylate / ethylene / glycidyl methacrylate =59.0/38.7/2.3 (weight ratio), and Mooney viscosity of 15 was obtained. Hereafter, this liquid crystal polyester is abbreviated as B-1.
   Mooney viscosity is the value measured using the large rotor at 100 °C according to JIS K6300.

### (3) Liquid crystal polymer flakes

A composition was obtained by melt-kneading 80 parts by weight of A-1 and 20 parts by weight of B-1 and extruding with TEX-30 type twin-screw extruder manufactured by Japan Steel Co., Ltd. at a cylinder setting temperature of 350 ° C, and a screw speed of 250rpm. The composition pellets showed optical anisotropy at a temperature of 340°C or more under pressure. The composition is abbreviated as D-1.

D-1 was melt-extruded with using a single screw extruder of 60mmφ equipped with a circular die, at a cylinder setting temperature of 350 ° C, and screw speed of 60rpm. A molten resin was extruded upwards from the circular die having a diameter of 50mm, a lip interval of 1.0mm, and a die setting temperature of 348 °C. Dry air was introduced into a hollow portion of the resultant tubular film to expand. Then, after cooling, it was passed through a nip roll to obtain a film. The blow up ratio was 2.3, the draw down ratio was 15.4, and the average thickness of the film was 30 *µ*m.

Tensile properties measured according to JIS C2318 were 30kg/mm² in longitudinal direction, the elongation at breakage was 1.6%, and the elastic modulus was 2200kg/mm². The oxygen gas permeability of the film was 3.5 (cc/m²·24h·1 atm), and water vapor permeability was 0.6 (g/m²·24h·1atm). This film is abbreviated as F-1.

F-1 was cut with scissors into pieces of about 1cmx3cm size, and beaten once with 2000g water by a KRK high concentration disk refiner produced by Kumagai Riki Kogyo Company Limited with adjusting beforehand the distance between disks to 0.10mm by reading of a distance meter. Flakes having a width of 0.5mm to 1mm and a length of 1mm to 2mm were obtained. The flake is abbreviated as R-1.

Furthermore, R-1 was beaten 10 more times by a KRK high concentration disk refiner produced by Kumagai Riki Kogyo Company Limited with adjusting beforehand the distance between disks to 0.01mm by reading of a distance meter, and then, after dispersing in water, the portion which pass through wire-gauze of 80 mesh but does pass through wire-gauze of 140 mesh was dried to obtain flakes R-2.

Meanwhile, a film with a average thickness of 30 *µ*m was obtained as the same manner with the above, except that 95.5% by weight of A-1 and 4.5 % by weight of B-1 were melt-kneaded, and blow up ratio was 1.2 and the draw down ratio was 29.1 in the stretching conditions of inflation molding. When the beating was carried out once by the above-mentioned manner, the product had a lot of branching structures like as pulp, and flakes having substantially no fibril- and pulp-structure could not be obtained.

### (4) Liquid crystal polymer film

A composition was obtained by melt-kneading 95 parts by weight of A-2 and 5 parts by weight of B-1 and extruding with TEX-30 type twin-screw extruder manufactured by Japan Steel Co., Ltd. at a cylinder setting temperature of 290 °C, and a screw speed of 400rpm. The composition pellets showed optical anisotropy at a temperature of 283°C or more under pressure. The composition is abbreviated as D-2.

D-2 was melt-extruded with using a single screw extruder of 60mmφ equipped with a circular die, at a cylinder setting temperature of 305 °C, and screw speed of 70rpm. A molten resin was extruded upwards from the circular die having a diameter of 70mm, a lip interval of 1.0mm, and a die setting temperature of 300 °C. Dry air was introduced into a hollow portion of the resultant tubular film to expand. Then, after cooling, it was passed through a nip roll to obtain a film. The blow up ratio was 2.6, the draw down ratio was 38.5, and the average thickness of the film was 12 *µ*m.

Tensile properties measured according to JIS C2318 were 34kg/mm² in longitudinal direction, and the elongation at breakage was 2.3%. The oxygen gas permeability of the film was 0.9 (cc/m²·24h· 1 atm), and water vapor permeability was 0.3 (g/m²·24h · 1atm). This film is abbreviated as F-2.

### (5) Adhesive

According to the method described in JP-A 61-127709, a copolymer (vinyl alcohol / ethylene / glycidyl methacrylate =5.0/83.0/12.0(weight ratio), and MFR(190°C)=7g) was obtained. The copolymer was heat-pressed at 180 ° C to obtain a sheet-type molded product having about 60 *µ*m thickness. Hereafter, the sheet is abbreviated as S-1.

### (6) Elastomer (production of a curable rubber composition)

50 parts by weight of ethylene/propylene/5-ethylidene-2-norbornene copolymer rubber (produced by Sumitomo Chemical Co., Ltd., trade name "Esprene E-582F", ethylene/propylene =90/10 (molar ratio), and iodine value =14), 50 parts by weight of ethylene/propylene/5-ethylidene-2-norbornene copolymer rubber (produced by Sumitomo Chemical Co., Ltd., trade name "Esprene E-512F", ethylene/propylene =78/22 (molar ratio), and iodine value =12), 1 part by weight of stearic acid, 5 parts by weight of zinc white(#1), 70 parts by weight of carbon black (produced by Tokai Carbon Co., Ltd., trade name "Seast 116"), 70 parts by weight of magnesium silicate (produced by Takehara Chemical Co . , trade name "Hitron"), 45 parts by weight of process oil (produced by Idemitsu Kosan Co.,Ltd., trade name "Diana PW380"), 5 parts by weight of calcium oxide (produced by Inoue Lime Company, trade name "Besta PP"), and 5 parts by weight of aliphatic hydrocarbon resin (produced by Exxon Chemical Ltd., trade name "Escorets 1102B") were mixed using a Banbury mixer to obtain a compound. Then, 1.0 part by weight of sulfur, 1.5 parts by weight of a curing accelerator TT (tetramethylthiuram disulfide), and 0.5 parts by weight of curing accelerator M (2-mercaptobenzothiazole) were added to this compound, and a curable rubber composition was obtained by kneading using an open roll. The curable rubber composition is abbreviated as E-1.

### (7) Measurement of oxygen permeability

According to JIS K7126 (equal pressure method), oxygen permeability was measured with using a oxygen permeability measurement apparatus (OX-TRAN 10/50A, produced by MOCON Co.). The measurement was conducted at a temperature of 23 °C, relative humidity of 60% at both test gas side and carrier gas side, with using a test gas of 99.99% oxygen, and a carrier gas of 98% nitrogen and 2% hydrogen. The unit of the resultant oxygen permeability is cc/m² · 1atm · 24hr. The value was not calculated in thickness conversion but in the thickness used as it was.

### (8) Measurement of water vapor permeability

According to JIS Z0208 (cup method), it was measured under the condition of the temperature of 23 °C, and the relative humidity of 90%. The units is g/m² · 24hr. In addition, the value was not calculated in thickness conversion (e.g. as cc-25 *µ*m/m²·atm·24hr), but in the thickness used as it was.

### Example 1

The elastomer (curable rubber composition) obtained above was used to prepare a sheet (15cmx15cmx1mm (thickness)). On this sheet, an adhesion layer (S-1) and a liquid crystal polymer film (F-2) are piled up. Using a 1.2 mm spacer, curing and adhesion were performed for 30 minutes at 160 ° C by using a hand press, and an elastomer laminate was obtained. Tactile feeling at the time of bending was as practically equal as the sheet of Comparative Example 1. The test piece was measured as to oxygen permeability, and water vapor permeability. The result was very good as below.
Oxygen Permeability: 0.9cc/m² · 24hr · 1atm
Water vapor permeability: 0.2 to 0.3g/m² · 24hr

### Example 2

On a commercial curable natural rubber sheet having 0.5 mm thickness, an adhesion layer (S-1) and a liquid crystal polymer film (F-2) are piled up. Using a 0.5 mm spacer, at 140 ° C for 10 minutes by using a hand press, sheet type elastomer molded product was obtained. The oxygen permeability was very good as below.
Oxygen Permeability : 0.9cc/m² · 24hr · 1atm

### Example 3

75 % by weight of E-1, and 25 % by weight of R-1 were mixed for 3 minutes by a Banbury mixer, passed through calender roll having a gap of 0.9mm, and a sheet of 1mm thickness was obtained. Using a 1.0 mm spacer, curing was performed for 30 minutes at 160 ° C by using a hand press , and an elastomer molded product was obtained.

The test piece was measured as to oxygen permeability, and water vapor permeability. The result was comparatively good as below.
Oxygen Permeability: 65cc/m² · 24hr · 1atm
Water vapor permeability: 3 to 4 g/m² · 24hr

### Example 4

An elastomer (curable rubber composition) obtained above was used, to prepare two sheets (15cm x 15cm x 1mm(thickness)). Between these sheets, a liquid crystal polymer film (F-2) was sandwiched. Using a 2.1 mm spacer, curing was performed for 30 minutes at 160 ° C by using a hand press, and an elastomer laminated product was obtained.

The test piece was measured as to oxygen permeability, and water vapor permeability. The result was very good as below. Oxygen Permeability: 0.9cc/m² · 24hr · 1atm,
Water vapor permeability: 0.2 to 0.3 g/m² · 24hr,

### Example 5

80 % by weight of E-1, and 20 % by weight of R-1 were mixed for 3 minutes by a Banbury mixer, passed through calender roll having a gap of 0.9mm, and a sheet of 1mm thickness was obtained. Using a 1.0 mm spacer, curing was performed for 30 minutes at 160 ° C by using a hand press , and an elastomer molded product was obtained.

The test piece was measured as to oxygen permeability, and water vapor permeability. The result was good as below. Oxygen Permeability: 28cc/m² · 24hr · 1atm
Water vapor permeability: 2 g/m² · 24hr

### Example 6

10g of R-2 was dispersed in 50 cc of 5% chloroform solution of B-1, applied on one side of a sheet made of a commercial cured natural rubber several times, and dried. The oxygen permeability of the sheet was 130cc/m² · 24hr · 1atm

### Comparative Example 1

The elastomer (curable rubber composition) obtained above was used and a sheet (15cm x 15cm x lmm(thickness)) was made. Except that the adhesion layer and the liquid crystal polymer film were not piled up, the elastomer sheet alone was cured as the same condition as Example 1.

The oxygen permeability, and water vapor permeability were as below.
Oxygen Permeability: 680cc/m² · 24hr · 1atm
Water vapor permeability: 9 to 11g/m² · 24hr

### Comparative Example 2

Oxygen permeability of a commercial curable natural rubber sheet having 0.5 mm thickness was measured, not good as to be 2000cc/m² · 24hr · 1atm.

The elastomer molded article of the present invention is excellent in gas barrier property and can be made in thin thickness without spoiling the flexibility as the elastomer originally has, and the industrial value is large.

## Claims

1. An elastomer molded product, including a construction where a layer containing a liquid crystal polymer and a layer made of an elastomer are laminated.

2. The elastomer molded product according to claim 1, including a construction where a layer made of an elastomer, a layer containing a liquid crystal polymer and a layer made of an elastomer are laminated in this order.

3. The elastomer molded product according to claim 1 or 2, wherein the layer containing the liquid crystal polymer and the layer made of the elastomer are laminated through an adhesive layer.

4. The elastomer molded product according to any of claims 1 to 3, wherein the layer containing the liquid crystal polymer is made of a liquid crystal polymer film.

5. The elastomer molded product according to any of claims 1 to 3, wherein the liquid crystal polymer is in form of liquid crystal polymer tabular (plate-form) flakes.

6. The elastomer molded product according to any of claims 1 to 3, wherein the layer containing the liquid crystal polymer is made by coating a solution containing the liquid crystal polymer tabular (plate-form) flakes.

7. An elastomer molded product, wherein liquid crystal polymer flakes are dispersed in an elastomer.

8. The elastomer molded product according to claim 7, wherein the amount of the flakes is 5 to 100 parts by weight based on 100 parts by weight of the elastomer.

9. The elastomer molded product according to any of claims 1 to 8, wherein the liquid crystal polymer is a liquid crystal polyester.

10. The elastomer molded according to any of claims 1 to 8 wherein the liquid crystal polymer is a liquid crystal polyester resin composition comprising (A) a liquid crystal polyester as a continuous phase and (B) a copolymer having a functional group reactive with the liquid crystal polyester as a dispersed phase.

11. The elastomer molded product according to any of claims 1 to 8, wherein the liquid crystal polymer is a composition obtained by melt-kneading (A) 56.0 - 99.9% by weight of a liquid crystal polyester and (B) 44.0 to 0.1 % by weight of a copolymer having a functional group reactive with the liquid crystal polyester.

12. The elastomer molded product according to claim 10 or 11, wherein the functional group is an epoxy group, oxazolyl group or amino group.

13. The elastomer molded product according to any of claim 10 to claim 12 wherein the copolymer (B) having a functional group reactive with the liquid crystal polyester is a copolymer containing 0.1 to 30% by weight of unsaturated carboxylic acid glycidyl ester unit and/or unsaturated glycidyl ether unit.

14. The elastomer molded product according to claim 10 or claim 11 wherein the copolymer (B) having a functional group reactive with the liquid crystal polyester is a rubber having an epoxy group.

15. The elastomer molded product according to claim 10 or claim 11 wherein the copolymer (B) having a functional group reactive with the liquid crystal polyester is a thermoplastic resin having an epoxy group.

16. The elastomer molded product according to any of claims 1 to 15, wherein the elastomer is a thermoplastic.

17. The elastomer molded product according to any of claims 1 to 15, wherein the elastomer is a cured natural rubber or cured synthetic rubber.

18. The elastomer molded product according to claim 5, wherein the film made of a liquid crystal polymer is a film obtained by inflation molding.

19. The elastomer molded product according to claim 5, wherein the liquid crystal polymer flakes are obtained by crushing a film.

20. The elastomer molded product according to any of claims 1 to 19, wherein the molded product is sheet-form, tubular, hollow-spherical, doughnut-shaped or balloon-shaped.

21. A liquid crystal polymer flake having substantially no fibril or pulp structure, and the width and the length are larger than the thickness.

22. The flake according to claim 21, wherein the thickness is not less than 0.5 *µ*m and not more than 500 *µ*m.

23. Aprocess for producing liquid crystal polymer flakes, comprising crushing a film obtained by a thermal molding method.

24. The process for producing the flake according to claim 23, wherein the thermal molding method is an inflation molding method.

25. The process for producing the flake according to claim 24, wherein the inflation molding is conducted at a blow up ratio of 2.0 to 15.0.

26. The process for producing the flake according to claim 23, 24 or 25, wherein the film is crushed by beating and breaking down with using a refiner.
